# EUROPEAN PATENT APPLICATION

(11) **EP 2 608 081 A2**
(43) Date of publication of application: **26.06.2013**
(21) Application number: 12198779.6
(22) Date of filing: 20.12.2012
(51) Int. Cl.: G06F 17/30

(54) **Image forming apparatus and web information providing method**

(30) Priority: 21.12.2011 KR 20110139181
(71) Applicant: Samsung Electronics Co., Ltd., Gyeonggi-do 443-742 (KR)
(72) Inventor: Jo, Yong-sung, Seoul (KR); Um, Se-yong, Seoul (KR); Kim, Na-young, Gyeonggi-do (KR); Cho, Young-taek, Gyeonggi-do (KR)
(74) Representative: Fearnside, Andrew Simon

(57) **Abstract**

A web information providing method of an image forming apparatus having a web browser. The web information providing method includes displaying a web page for receiving an input of a user control command, caching web page information corresponding to a web page to be displayed after the web page, while waiting for the user control command in the web page, and displaying the web page to be displayed after the web page based on the cached web page information, when the user control command is input in the web page.

## Description

This application claims priority benefit of Korean Patent Application No. 10-2011-0139181, filed on December 21, 2011 in the Korean Intellectual Property Office on, the disclosure of which is incorporated herein by reference.

### BACKGROUND

### 1. Field

Example embodiments of the following disclosure relate to an image forming apparatus and web information providing method thereof, and more particularly, to an image forming apparatus which caches web page information corresponding to a web page to be displayed after a current web page while waiting for a user control command in the web page for receiving a user control command, and converting the cached web page information into a format which can be displayed by a web browser, and a web information providing method thereof.

### 2. Description of the Related Art

An image forming apparatus refers to an apparatus which records print data generated in a terminal, such as, a computer. Examples of such an image forming apparatus are a copier, printer, facsimile, and multi function peripheral (MFP) which has all the functions of the copier, printer, and facsimile.

Recent image forming apparatuses have web browsers which receive various web services provided by a web server. In such a case, after an image forming apparatus is booted and activated, a web browser is driven to request web page information to the web server, and a web page is displayed using the received web page information.

However, a problem arises in that it takes a lot of time for the image forming apparatus to be turned on and the web page corresponding to the user's request to be displayed, causing much inconvenience to the user. That is, when the user control command is input in the web page, the web browser requests web page information corresponding to the user control command from the web server, and then the web server responds to the web browser with a result. Then, the web browser shows the result to the user using the received web page information. Herein, there has to be a delay from the input of the user control command until the result is showed to the user, which problematic.

Accordingly, an image forming apparatus uses a caching method which stores web page information received more than once in an arbitrary memory space, and when a user's request is made, searches the arbitrary memory space for web page information if there already is the same web page information, and then shows the stored web page information instead of requesting for new web server information to the web server, thereby reducing load time and response time.

In such a case, however, since caching only stores information that has been requested more than once, there still remains a problem of delay being generated when the web page information is one that is requested for the first time or has been changed.

Moreover, in order to resolve such problems, in an image forming apparatus according to this present disclosure, a web browser requests for web page information to the web server and stores it, and then displays the stored web page information through the web browser during an initialization of the image forming apparatus, thereby reducing the time spent in showing the web page.

In such a case, however, requesting all web page information to be used in the web page all at once during the initial booting causes an initial delay, which makes the user to wait after booting. Moreover, since web page information is cached only once during the initial booting, there is another problem that contents of which web page information is changed during a delay or execution due to a request which requires processing time cannot use the cached web page information. For example, in a case where it takes several seconds for a server to process a user's request, when the user makes such a request, the user has to wait for that time since it takes several seconds for the server to send a result to the user after processing for about several seconds. This delay cannot be resolved by requesting and storing the web page information stored during the initial booting. Moreover, since the web page information which is changed frequently is different from the web page information stored during the initial booting, the stored web page information becomes not usable, which makes it impossible to exert the effect of reducing the delay.

### SUMMARY

Additional aspects and/or advantages will be set forth in part in the description which follows and, in part, will be apparent from the description, or may be learned by practice of the disclosure.

According to the present invention there is provided an apparatus and method as set forth in the appended claims. Other features of the invention will be apparent from the dependent claims, and the description which follows.

An aspect of the exemplary embodiments relates to an image forming apparatus which caches web page information corresponding to a web page to be displayed after a current web page and converts the cached web page information into a format that can be displayed by a web browser, while waiting for a user control command in a web page for receiving an input of a user control command thereby quickly displaying the web page, and a web information providing method thereof,

According to an exemplary embodiment of the present disclosure, a web information providing method of an image forming apparatus which has a web browser may include displaying a first web page for receiving an input of a user control command, caching web page information corresponding to a second web page to be displayed after the first web page, while waiting for the user control command in the first web page, and displaying the second web page to be displayed after the first web page based on the cached web page information, when the user control command is input in the first web page.

The caching may cache the web page information corresponding to the second web page to be displayed after the first web page based on menu map information, while waiting for the user control command in the first web page, and the menu map information may include user configuration information, list information of an executable application, menu configuration information of the executable application, and operation information of the executable application.

The menu map information may be one that is received from a web server or stored in a storage unit of the image forming apparatus.

The caching may include detecting the menu configuration information of the executable application and the operation information of the executable application from the menu map information, requesting for the web page information corresponding to the second web page to be displayed after the first web page to the web server, based on the detected menu configuration information of the executable application and the operation information of the executable application, to the web server, and caching the requested web page information.

The web information providing method of an image forming apparatus which has a web browser may further include receiving user information for performing a log in to the web server, requesting for the menu map information to the web server, when the log in to the web server succeeds, and receiving the menu map information corresponding to the input user information from the web server.

The web information providing method of an image forming apparatus which has a web browser may further include requesting for the menu map information to the web server when the image forming apparatus is turned on when the web server does not need a log in, and receiving the menu map information from the web server.

The web information providing method of an image forming apparatus which has a web browser may further include loading the cached web page information on a hidden layer which cannot be seen on a screen displayed by the web browser while waiting for the user control command in the first web page, and converting the loaded web page information into a format which can be displayed by the web browser, and the displaying the second web page to be displayed after the first web page may display the second web page to be displayed after the first web page based on the converted web page information when the user control command is input in the first web page.

The loaded web page information may be converted into a DOM (Document Object Model) tree format.

The web information providing method of an image forming apparatus which has a web browser may further include storing the converted web page information in a storage unit of the image forming apparatus.

According to an exemplary embodiment of the present disclosure, an image forming apparatus having a web browser may include a user interface unit which displays a first web page for receiving an input of a user control command, and a control unit which caches web page information corresponding to a second web page to be displayed after the first web page while waiting for the user control command in the first web page, and the control unit may control the user interface unit to display the second web page to be displayed after the first web page based on the cached web page information, when the user control command is input in the first web page.

The control unit may cache the web page information corresponding to the second web page to be displayed after the first web page while waiting for the user control command in the first web page, and the menu map information may include user configuration information, list information of an executable application, menu configuration information of the executable application and operation information of the executable application.

The menu map information may be one that is received from a web server or stored in a storage unit of the image forming apparatus.

The control unit may control to detect the menu configuration information of the executable application and the operation information of the executable application from the menu map information, request for the web page information corresponding to the second web page to be displayed after the first web page to the web server based on the detected menu configuration information of the executable application and the operation information of the executable application to the web server, and cache the requested web page information.

The user interface unit may display a web page for receiving an input of user information for performing a log in to a web server, and the control unit may control a web browser to request for the menu map information to the web server, and to receive the menu map information corresponding to the user information input from the web server, when the log in to the web server succeeds.

The control unit may control the web browser to request for the menu map information to the web server when the image forming apparatus is turned on when the web server does not need a log in, and to receive the menu map information from the web server.

The control unit may load the cached web page information on a hidden layer which cannot be seen on a screen displayed by the web browser while waiting for the user control command in the web page and convert the loaded web page information into a format which can be displayed by the web browser, and the user interface unit may display the second web page to be displayed after the first web page based on the converted web page information when the user control command is input in the first web page.

The control unit may convert the loaded web page information into a DOM (Document Object Model) tree format.

The image forming apparatus having a web browser may further include a storage unit which stores the converted web page information.

According to an exemplary embodiment of the present disclosure, a recording medium where a program code for embodying a web information providing method of an image forming apparatus having a web browser may include displaying a first web page for receiving an input of a user control command; caching web page information corresponding to a second web page to be displayed after the first web page while waiting for the user control command in the first web page; and displaying the second web page to be displayed after the first web page based on the cached web page information, when the user control command is input in the first web page.

### BRIEF DESCRIPTION OF THE DRAWINGS

The above and/or other aspects of the present disclosure will be more apparent by describing certain present disclosure with reference to the accompanying drawings, in which:
FIG. 1 is a block diagram illustrating an image forming apparatus, according to an exemplary embodiment of the present disclosure;
FIGS. 2 to 3 are views illustrating a web page for explaining a web information providing method of an image forming apparatus, according to an exemplary embodiment of the present disclosure;
FIG. 4 is a view illustrating a script language corresponding to a menu map information;
FIG. 5 is a view illustrating a method of configuring a Document Object Model (DOM) tree in a hidden layer;
FIG. 6 is a view for explaining a web information providing method of an image forming apparatus, according to an exemplary embodiment of the present disclosure;
FIG. 7 is a flowchart for explaining a web information providing method of an image forming apparatus, according to an exemplary embodiment of the present disclosure; and
FIG. 8 is a timing view specifically illustrating a web information providing method of an image forming apparatus, according to an exemplary embodiment of the present disclosure.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

Although a few embodiments of the present disclosure have been shown and described, it would be appreciated by those skilled in the art that changes may be made in this embodiment without departing from the principles and spirit of the disclosure, the scope of which is defined in the claims and their equivalents.

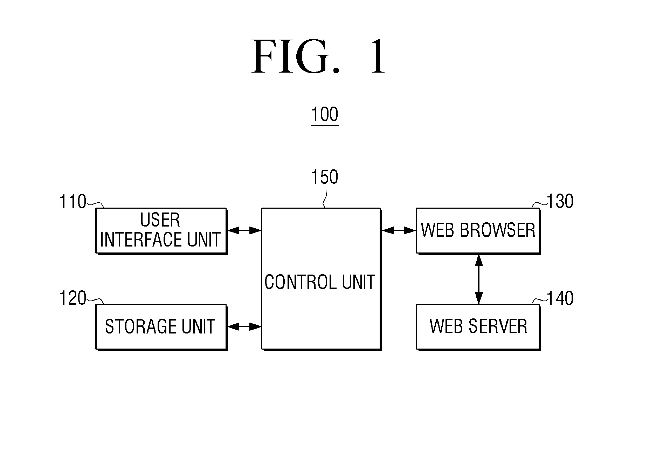

FIG. 1 is a block diagram illustrating an image forming apparatus 100, according to an exemplary embodiment of the present disclosure. With reference to FIG. 1, the image forming apparatus 100 includes a user interface unit 110, storage unit 120, web browser 130, web server 140, and control unit 150.

The user interface unit 110 performs a function of enabling a user to set or select various functions provided in the image forming apparatus 100.

More specifically, the user interface unit 110 may display a web page for receiving an input of a user control command.

Furthermore, when a user control command is input in the web page through the user interface unit 110, a web page to be displayed after a current web page may be displayed based on cached web page information, according to controls by the control unit 150 to be explained hereafter.

In addition, the user interface unit 100 may display a web page for receiving an input of user information for performing a log in to the web server 140.

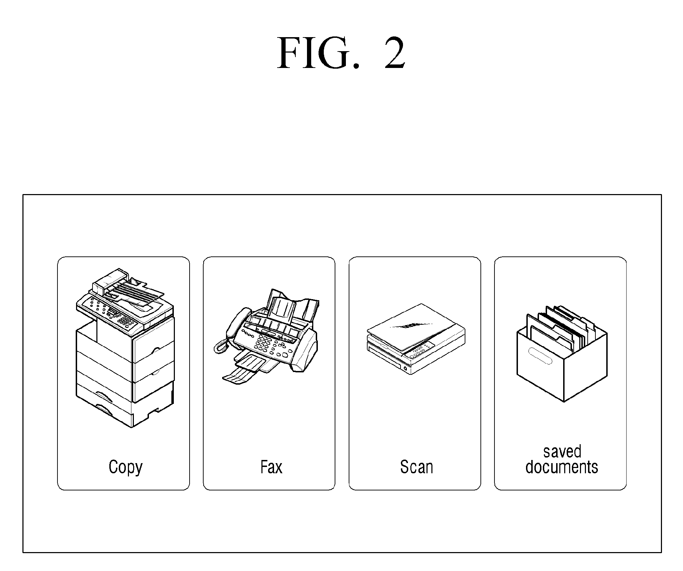

Herein, the web page may be a UI (User Interface) window for receiving the user control command. This will be explained hereinafter with reference to FIGS. 2 to 3.

Herein, the user interface unit 110 may be embodied as a device where input and output may be embodied at the same time, or as a combination of an input apparatus, such as, a mouse and keyboard, and a display apparatus, such as, a CRT monitor, an LCD monitor, and an LED monitor.

The storage unit 120 performs a function of storing various programs and data necessary to drive the image forming apparatus 100.

More specifically, the storage unit 120 may store menu map information. Herein, the menu map information may include user configuration information, list information of an executable application, menu configuration information of the executable application and operation information of the executable application. That is, although it is desirable for the control unit 150 (which will be explained below) to request and cache web page information corresponding to a web page to be displayed after a current web page based on the menu map information received by a request for the menu map information to the web server 140, in a case where changing of the menu map information of the web server 140 is not frequent, the storage unit 120 may store the menu map information and then subsequently access it for use or processing.

In addition, the storage unit 120 may store converted web page information converted into a format which can be displayed by a web browser. Herein, the converted web page information is information that has been converted into a DOM (Document Object Model) tree format, in which the browser can display the cached web browser information, i.e., a web page. In other words, the control unit 150 to be explained hereinafter may detect menu configuration information of an executable application and operation information of the executable application from the menu map information, request for web page information corresponding to a web page to be displayed after the current web page to the web server 140 based on the detected menu configuration information and the operation information of the executable application, and cache the requested web page information. In this case, the control unit 150 may convert the cached web page information into a format that can be displayed on the web browser and store it in the storage unit 120. Accordingly, by converting the cached web page information into a format that can be displayed on the web browser while waiting for the user control command in the web page, it is possible to reduce time spent in converting information into a format that may be displayed on the web browser.

In addition, by directly displaying the web page stored in the storage unit 120 on the user interface unit 110 without re-requesting for already stored web page to the web server 140, it is possible to remove delay due to a traffic state, load of the web server 140, or a data size.

Herein, the storage unit 120 may be embodied not only as a storage element having an internally mounted format, such as, a RAM (Random Access Memory), flash memory, ROM (Read Only Memory), EPROM (Erasable Programmable ROM), EEPROM (Electronically Erasable and Programmable ROM), register, hard disk, removable disk, and memory card, but also as a storage element having a detachable format such as a USB memory, and CD-ROM. The foregoing are examples of the various embodiments of the storage unit and the present disclosure is not limited thereto.

The web browser 130 performs a function of displaying a web page using web page information so as to enable the use of a web service.

More specifically, the web browser 130 may analyze a markup document written in SGML, HTML, and XML, for example, having the web page to be displayed on the user interface unit 110.

The web server 140 performs a function of providing a web service.

More specifically, the web server 140 may store menu map information. Therefore, the web server 140 may provide menu map information, according to a request by the control unit 150.

That is, when it is necessary to log in to the web server 140, user information for performing the log in to the web server 140 is input through the interface unit 110, and when the log in to the web server 140 succeeds, menu map information corresponding to the input user information may be provided to the control unit 150. For example, if a user corresponding to the input user information can only use a copy application, the web server 140 may only provide menu map information corresponding to the copy application.

In addition, when a log in to the web server 140 is not necessary, the web server 140 may provide the menu map information to the control unit 150 when the image forming apparatus is turned on. For example, when a log in is not necessary, the menu map information provided in the web server 140 may be set as default to a copy application, fax application, scan application, and save document application, and the web server 140 may provide the menu map information corresponding to the copy application, fax application scan application, and saved document application.

Furthermore, the web server 140 may store web page information. Therefore, the web server 140 may provide web page information, according to a request by the control unit 150. That is, in the case of detecting the menu configuration information of the executable application and the operation information of the executable application from the menu map information, and requesting for the web page information corresponding to a web page to be displayed after the web page based on the detected menu configuration information of the application and the operation information of the executable application to the web server, the web server 140 may provide the requested web page information. Herein, the web page information may be image, text and web page characteristics information, however, the present disclosure is not limited thereto.

Meanwhile, in explaining FIG. 1, the web server 140 includes the image forming apparatus 100, but there is no limitation to such a configuration, and the web server 140 may be embodied as a format that is separated from the web server 140.

The control unit 150 controls overall functions of the image forming apparatus 100.

More specifically, the control unit 150 may control the user interface unit 110, storage unit 120, web browser 130, and web server 140.

In addition, the control unit 150 may control the user interface unit 110, storage unit 120, web browser 130, and web server 140 so that web page information corresponding to a web page to be displayed after the current web page is cached while waiting for the user control command in the web page displayed on the user interface unit 110. More specifically, the control unit 150 may cache the web page information corresponding to the web page to be displayed after the current web page while waiting for the user control command in the web page based on the menu map information.

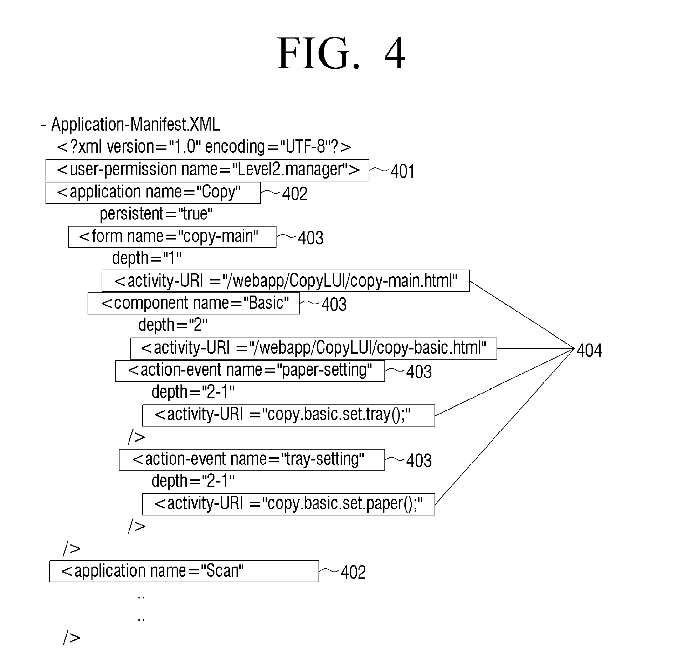

Herein, the menu map information may include user configuration information, list information of the executable application, menu configuration information of the executable application and operation information of the executable application. Explanation on the menu map information will be made with reference to FIG. 4.

FIG. 4 is a view illustrating a script language corresponding to the menu map information. With reference to FIG. 4, the script language corresponding to the menu map information includes user configuration information 401, list information 402, menu configuration information 403 of the executable application and operation information 404 of the executable application.

The user configuration information 401 is information for showing to which kind of user the menu map information is allowed. FIG. 4 shows that the menu map information is allowed to an administrator. That is, a log in to the web server 140 has to succeed if it is to be embodied to receive the menu map information, and if a log in user is an administrator, the menu map information of FIG. 4 will be received.

The list information 402 of the executable application is information for the user to show the list of the executable application, and with reference to FIG. 4, it can be seen that it is possible to use a copy application and scan application.

The menu configuration information 403 of the executable application is information on a lower rank menu of the application executable by the user, and with reference to FIG. 4, it can be seen that there may be a Basic menu as a lower rank menu of the copy application, and a paper-setting menu and tray-setting menu as a lower rank menu of the Basic menu.

The operation information 404 of the executable application is URL information for requesting for web page information corresponding to each menu, and with reference to FIG. 4, the Basic menu is URL = "/webapp/CopyLUI/copy-basic.html."

That is, the control unit 150 may detect the menu configuration information 403 of the executable application within the menu map information received from the web server 140 and the operation information 404 of the executable application. In addition, the control unit 150 may request for web page information corresponding to a web page to be displayed after the current web page based on the operation information 404 of the detected menu configuration information 403 of the executable application and the operation information 404 of the executable application, from the web server.

As aforementioned, by caching the web page information corresponding to a web page to be displayed after the current web page while waiting for the user control command in the web page for receiving the user control command, it is possible to resolve the problem of delay and quickly display the web page, which could not be solved by other caching methods.

Moreover, the control unit 150 may request for the menu map information to the web server 140 when user information for performing the log in to the web server 140 is input through the user interface unit 110, and thus, the log in to the web server 140 succeeds. Accordingly, it is possible to receive the menu map information corresponding to the user information input from the web server 140.

In addition, when the web server 140 doesn't need a log in, the control unit 150 may request for the menu map information to the web server 140 when the image forming apparatus is turned on.

Furthermore, when the user control command is input in the web page through the user interface unit 110, the control unit 150 may control the user interface unit 110 to display the web page to be displayed after the current web page based on the cached web page information. More specifically, while waiting for the user control command in the web page, the control unit 150 may load the cached web page information to a hidden layer of the screen displayed by the web browser, and convert the loaded web page information into a format that can be displayed by the web browser. Accordingly, when the user control command is input in the web page, the user interface unit 110 may display the web page to be displayed after the current web page based on the converted web page information. Herein, the converted web page information is one that is converted into a DOM (Document Object Model) tree format that can be displayed by the web browser, i.e., the web page.

In addition, the control unit 150 may control the storage unit 120 to store the web page information converted into a format that can be displayed by the web browser.

Herein, the control unit 150 may convert the loaded web page information into the DOM (Document Object Model) tree format. Herein, in order to configure the DOM tree, the control unit 150 may control the web browser 130 to process a thread which processes each of the web pages displayed on the screen and the pre-requested web page as a thread for configuring the DOM tree, using a multi thread.

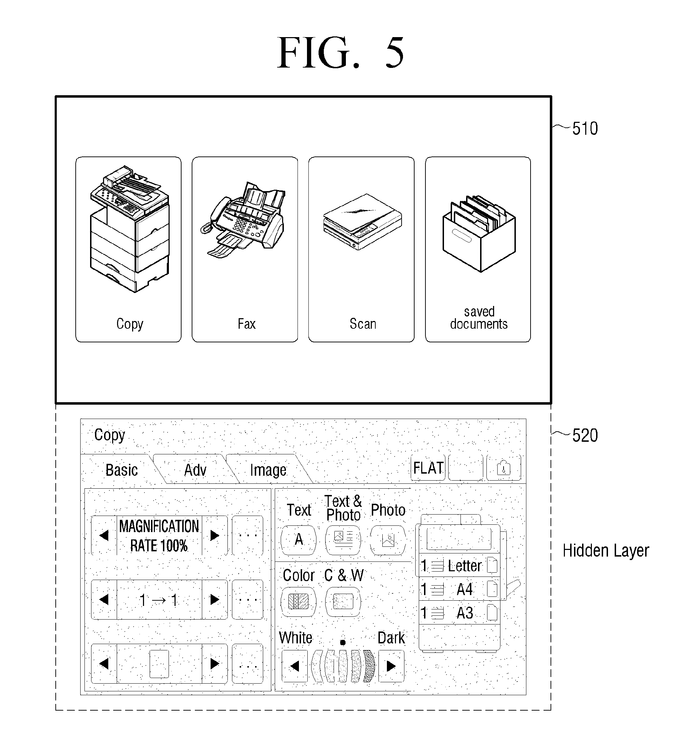

With reference to FIG. 5, more detailed explanation is as below. With reference to FIG. 5, a main web page 501 and a web page 520 regarding the converted Basic menu displayed on the hidden layer are included. As an example, the explanation on FIG. 5 is based on the case of a copy application.

The control unit 150 may know that a copy application, fax application, scan application, and saved document application are executable in the main web page 510 using the menu map information received from the web server 140. In addition, in a case where the copy application is executed using the menu map information, the control unit 150 may know that there are a Basic menu, Advance menu, and Image menu as lower rank menus. Therefore, the control unit 150 may request for the web page information regarding the Basic menu, Advance menu, and Image menu to be displayed after the main web page 510 from the web server, and cache the received web page information. Herein, the web page information may be image, text and web page characteristics information, however, the present disclosure is not limited thereto. Moreover, the control unit 150 may load the web page information regarding the cached Basic menu, Advance menu, and Image menu to the hidden layer 520 which cannot be seen on the screen displayed by the web browser, and convert the loaded web page information into a format that can be displayed by the web browser, while waiting for the user control command in the main web page 510. That is, since in order for the web browser to display the hidden layer 520, a conversion into a DOM (Document Object Model) format is necessary, and as such, the control unit 150 may control the web browser 130 to convert the web page information regarding the cached Basic menu, Advance menu, and Image menu loaded on the hidden layer 520 into a DOM format. Herein, the converted web page information means the web page. With reference to FIG. 5, it can be seen that the web page regarding the converted Basic menu is shown on the hidden layer 520. In addition, the control unit 150 may control so that the converted web page information is stored in the storage unit 120.

As aforementioned, by converting the cached web page information into a format which can be displayed by the web browser, while waiting for the user control command in the web page for receiving the user control command, it is possible to reduce the time it takes to convert into a format that can be displayed in the web browser.

In addition, by displaying the web page stored in the storage unit 120 on the user interface unit 110 without re-requesting for the web page which has been stored once in the web server 140, it is possible to eliminate delay due to traffic state, load of the server, or data size.

In addition, the control unit 150 may request for the menu map information from the web server 140 when the user information for performing a log in is input to the web server 140 through the user interface unit 110 and the log in to the web server 140 succeeds. Accordingly, it is possible to receive the menu map information corresponding to the user information input from the web server 140.

In addition, when the web server 140 doesn't need a log in, the control unit 150 may request for the menu map information to the web server 140 when the image forming apparatus is turned on. Accordingly, it is possible to receive the menu map information from the web server 140.

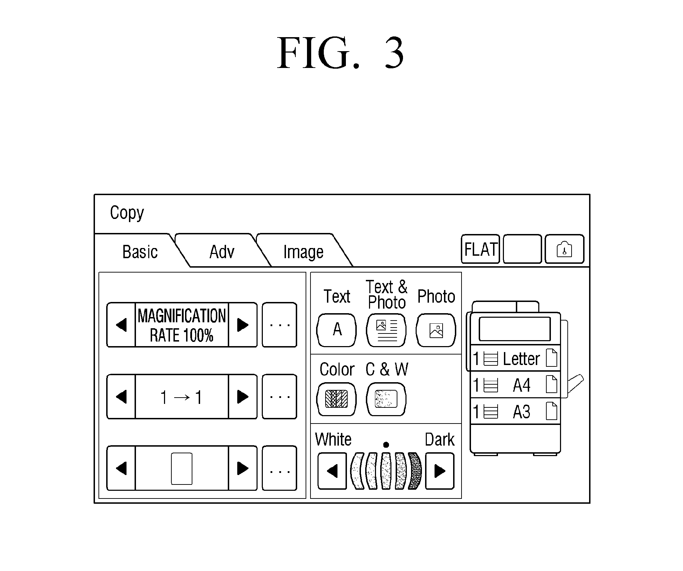

FIGS. 2 and 3 are views illustrating a web page for explaining a web information providing method of an image forming apparatus, according to an exemplary embodiment of the present disclosure.

With reference to FIG. 2, a web page for receiving the user control command includes a copy application, a fax application, a scan application, and a saved document application. In such a case, by selecting an application of the web page through the user interface unit 110, the user may perform a function corresponding thereto.

However, the present disclosure is not limited to above, and the web page may further include a USB (SCAN TO USB) application (a command to transmit a script read through a scanning unit to a USB), SCAN TO CLOUD application (a command to transmit a script read through a scanning unit to a CLOUD), SCAN TO BOX application (a command to store a script read through a scanning unit to a storage unit 120 of an image forming apparatus 100), and a BOX TO CLOUD application (a command to transmit data read through a scanning unit in a storage unit 120 of an image forming apparatus 100).

FIG. 3 is a view illustrating a web page which is shown when the user selects the copy application on the web page through the user interface unit 110. With reference to FIG. 3, it can be seen that when the copy application is selected, the Basic menu, Advance menu, and Image menu are included as its lower rank menu. In such a case, by selecting each sub menu through the user interface unit 110, the user may perform a function which corresponds thereto.

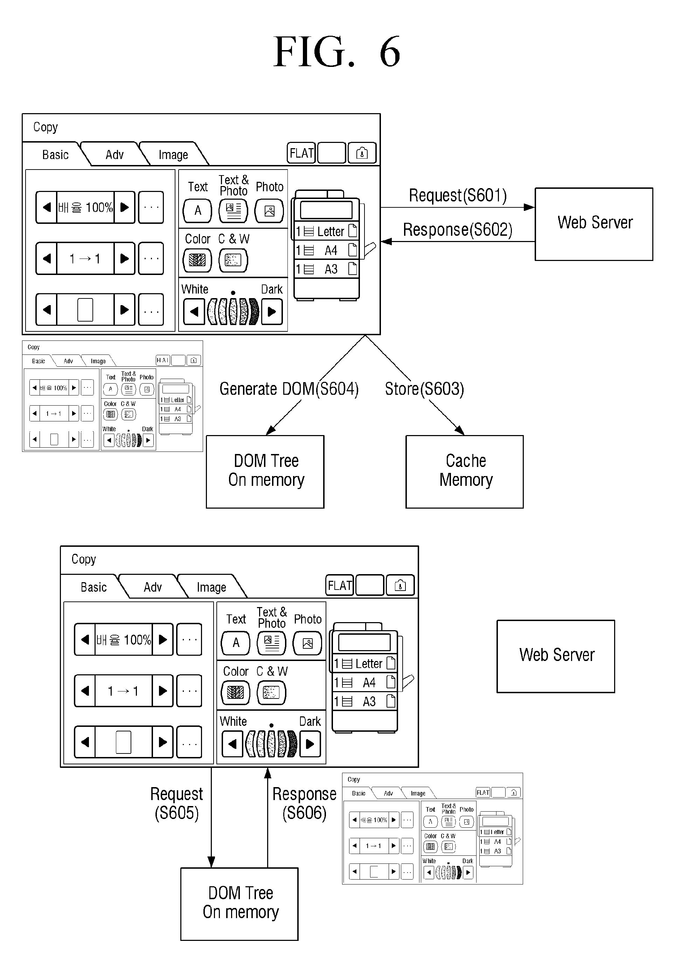

FIG. 6 is a view for explaining a web information providing method of an image forming apparatus, according to an exemplary embodiment of the present disclosure.

With reference to the top part of FIG. 6, while waiting for the user control command in the current web page using the menu map information received from the web server 140, a request is made for web page information corresponding to a web page to be displayed after the current web page, to the web server 140 (S601). Thereafter, requested web page information is received from the web server 140 (S602). Then, the received web page information is cached in a cache memory (S603).Then, while waiting for the user control command in the current web page, the cached web page information is loaded on the hidden layer which cannot be seen of the screen displayed by the web browser. Next, the loaded web page information is converted into a format that can be displayed by the web browser, and thus, a web page to be displayed after the current page is generated. In addition, the generated web page is stored in the storage unit 120 (S604).

With reference to the bottom part of FIG. 6, when the user control command is input in the current web page, a request for a web page is not made to the web server 140 but a request for the web page generated in S604 is made to the storage unit 120 (S605). Thereafter, requested web page is received from the storage unit 120 (S606). In addition, the web page corresponding to the request is displayed on the user interface unit 110.

As aforementioned, while waiting for the user control command in the web page for receiving the user control command, the cached web page information is converted into a format that can be displayed by the web browser, thereby reducing the time it takes to convert it into a format that can be displayed on the web browser.

In addition, by directly displaying the stored web page in the user interface unit 110, it is possible to remove the delay due to traffic state, load of the web server 140, or data size.

In addition, by using the web information providing method according to an exemplary embodiment of the present disclosure, it is possible to reduce the delay generated due to a certain time spent in responding to a process of the web server 140. For example, let's assume a case where the user executes a scan to email application, and there are an address book viewing menu and a preview menu. In this case, while waiting for the user control command in the current web page, using the menu map information received from the web server 140, a request is made for web page information corresponding to the address book viewing menu and preview menu to the web server 140. Then, the requested web page information is received from the web server 140. In this case, the web server 140 requests for the address book to an address book database in order to receive the address book, and when the web server 140 receives the address book, the web server 140 may transmit web page information regarding the address book.

Then, the received web page information is cached in the cache memory. Next, while waiting for the user control command in the current web page, the cached web page information is loaded on the hidden layer which cannot be seen on the screen displayed by the web browser, and the loaded web page information is converted into a format that can be displayed by the web browser, and thus, a web page to be displayed after the current page is generated. In addition, the generated web page is stored in the storage unit 120.

Then, when the user control command is input in the current web page, a request for a web page is not made to the web server 140, but a request for the generated web page is made to the storage unit 120. In addition, the web page corresponding to the request is displayed on the user interface unit 110.

As aforementioned, if the web page information is not cached while waiting for the user control command, when the web server 140 has to inquire about the address book that the user has and request it in the address book database, it would have to take a certain time. However, according to the web information providing method according to an exemplary embodiment of the present disclosure, it is possible to quickly display the web page by caching the web page information corresponding to the web page to be displayed after the current web page and converting the cached web page information into a format that can be displayed by the web browser.

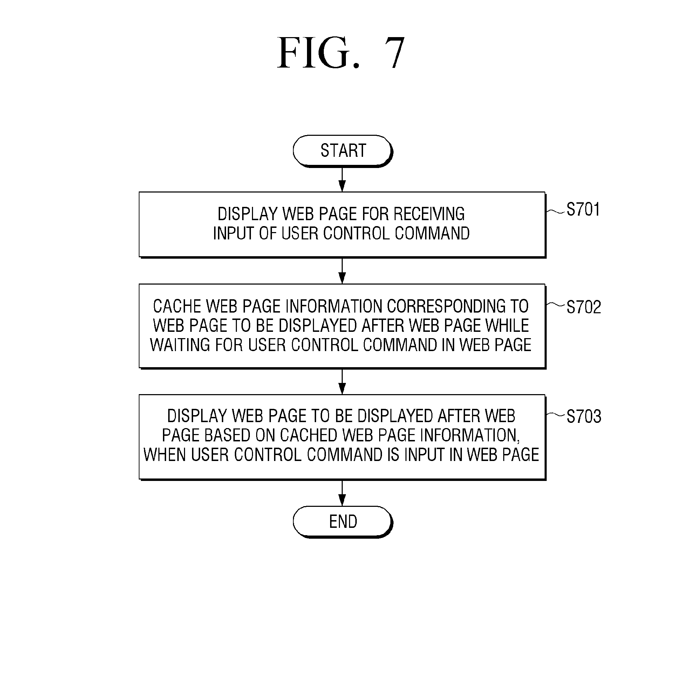

FIG. 7 is a flowchart for explaining the web information providing method of the image forming apparatus, according to an exemplary embodiment of the present disclosure.

With reference to FIG. 7, the web page for receiving an input of the user control command is displayed (S701).

Then while waiting for the user control command in the web page, the web page information corresponding to the web page to be displayed after the current web page is cached (S702). More specifically, while waiting for the user control command in the web page, the web page information corresponding to the web page to be displayed after the current web page may be cached based on the menu map information. Herein, the menu map information may include menu map information, user configuration information, list information of the executable application, menu configuration information of the executable application, and operation information of the executable application.

Furthermore, when the user control command is input in the web page, the web page to be displayed after the current web page is displayed based on the cached web page information (S703). More specifically, while waiting for the user control command in the web page, the cached page information may be loaded on the hidden layer which cannot be seen on the screen displayed by the web browser and the loaded web page information may be converted into a format that can be displayed by the web browser. Accordingly, when the user control command is input in the web page, the web page to be displayed after the current web page is displayed based on the converted web page information.

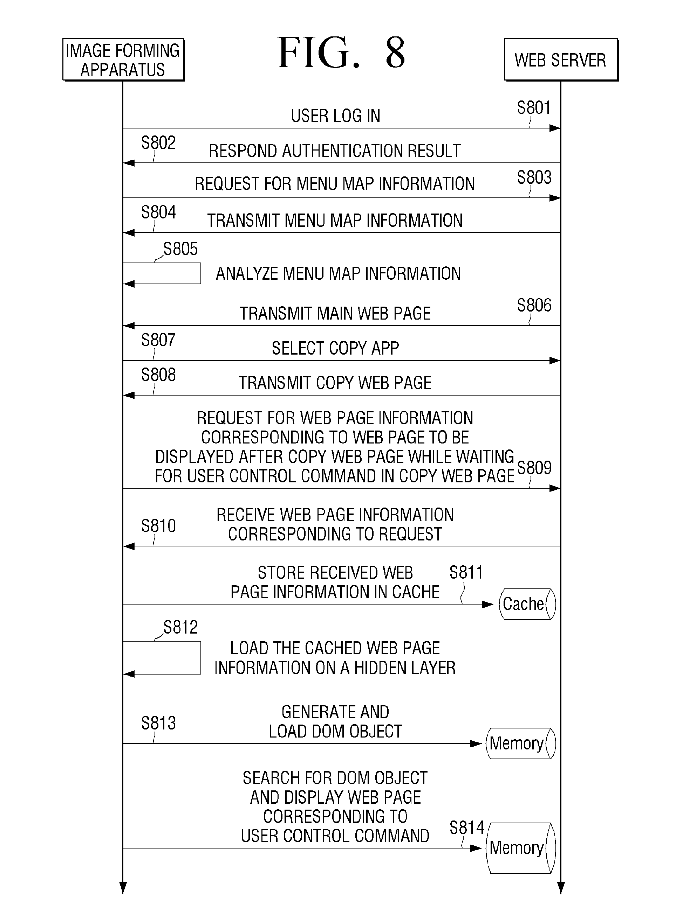

FIG. 8 is a timing view specifically illustrating the web information providing method of an image forming apparatus, according to an exemplary embodiment of the present disclosure.

With reference to FIG. 8, the user performs a log in to the web server (S801). When the log in is performed, the web server responds with an authentication result regarding the log in (S802). Then, a request for the menu map information is made according to the authentication result (S803). The web server transmits the menu map information corresponding to the request (S804). Then, the image forming apparatus analyzes the menu map information (S805). Then, the web server transmits the main web page to the image forming apparatus (S806). When the copy application is selected in the main web page displayed on the image forming apparatus (S807), the web server transmits a copy web page (S808). While waiting for the user control command in the copy web page, the image forming apparatus requests for web page information corresponding to the web page to be displayed after the copy web page to the web server (S809). Then, the web page information corresponding to the request from the web server is received (S810). In addition, the image forming apparatus stores the received web page information in the cache memory (S811). Next, while waiting for the user control command in the copy web page, the cached web page information is loaded on the hidden layer which cannot be seen on the screen displayed by the web browser, and the loaded web page information is converted into a DOM tree format which can be displayed by the web browser (S812). The converted web page information is stored in the storage unit (S813). When the user control command is input in the copy web page, a search for the web page is made in the storage unit, and the web page to be displayed after the copy web page is displayed (S814).

A user log in was necessary in explaining FIG. 8, but depending on embodiment methods, it is possible to embody the present disclosure as one that can be accessed without a log in.

In addition, it was explained that the main web page is provided to the image forming apparatus first, but depending on embodiment methods, it is possible to embody the present disclosure as one that that does not provide the main web page first to the image forming apparatus. In this case, the image forming apparatus may request for the main web page and lower rank web page etc. to the web server based on the menu map information.

In addition, although it was explained that the copy application is selected in the main web page, other applications can be selected instead.

Meanwhile, the web information providing method of the image forming apparatus according to various exemplary embodiments of the present disclosure may be embodied as a program code and be stored in various types of recording media such as a RAM (Random Access Memory), flash memory, ROM(Read Only Memory), EPROM(Erasable Programmable ROM), EEPROM(Electronically Erasable and Programmable ROM), register, hard disk, removable disk, memory card, and USB memory, CD-ROM that can be read in a terminal, however, the present disclosure is not limited thereto.

Accordingly, a program may be installed so that the web information providing method can be executed in an apparatus where such recording media is connected or mounted.

Meanwhile, according to various exemplary embodiments of the present disclosure, while waiting for the user control command in the web page for receiving the user control command, it is possible to quickly display the web page by caching the web page information corresponding to the web page to be displayed after the current web page and converting the cached web page information into a format that can be displayed by the web browser. That is, it is possible to quickly display the web page without delay generated when a request is made for new or changed web page information or when there needs to be processing time for the web server.

Meanwhile, according to various exemplary embodiments of the present disclosure, a caching may be made in advance while waiting for the user's operation, thereby improving a UI response speed. Even in cases where it is impossible to use the existing caching method since a page includes a lot of resources such as an image, etc., and thus, the size is big, where it takes a certain time to process a result of the user's request, or where data is changed frequently, it is possible to improve the UI response speed.

Meanwhile, according to various exemplary embodiments of the present disclosure, it is possible to resolve the problem of delay and quickly display the web page which cannot be resolved by conventional caching methods by caching the web page information corresponding to the web page to be displayed after the current web page while waiting for the user control command in the web page for receiving the user control command.

In addition, it is possible to reduce the time it takes to convert into a format which can be displayed in the web browser by converting into a format which can be displayed in the web browser while waiting for the user control command in the web page.

Furthermore, it is possible to remove the delay due to traffic state, load of the web server 140, or data size, by directly displaying the web page stored in the storage unit in the user interface unit without re-requesting for the already stored web page to the web server.

The embodiments of the above disclosure may be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Further, according to an aspect of the embodiments, any combinations of the described features, functions and/or operations can be provided.

Moreover, the image forming apparatus 100, as shown in FIG. 1, may include at least one processor to execute at least one of the above-described units and methods.

Although a few embodiments of the present disclosure have been shown and described, it would be appreciated by those skilled in the art that changes may be made in this embodiment without departing from the principles and spirit of the disclosure, the scope of which is defined in the claims and their equivalents.

## Claims

1. A web information providing method of an image forming apparatus that has a web browser, the method comprising:
displaying a web page for receiving an input of a user control command;
caching web page information corresponding to a web page to be displayed after the web page, while waiting for the user control command in the web page; and
displaying the web page to be displayed after the web page based on the cached web page information, when the user control command is input in the web page.

2. The method according to claim 1, wherein the caching caches the web page information corresponding to a web page to be displayed after the web page based on menu map information, while waiting for the user control command in the web page, and
the menu map information comprises user configuration information, list information of an executable application, menu configuration information of the executable application, and operation information of the executable application.

3. The method according to claim 2, wherein the menu map information is information that is received from a web server or stored in a storage unit of the image forming apparatus.

4. The method according to claim 3, wherein the caching comprises:
detecting the menu configuration information of the executable application and the operation information of the executable application from the menu map information;
requesting for the web page information corresponding to a web page to be displayed after the web page to the web server, based on the detected menu configuration information of the executable application and the operation information of the executable application; and
caching the requested web page information.

5. The method according to any one of claims 2 to 4, further comprising:
receiving user information for performing a log in to the web server;
requesting for the menu map information to the web server, when the log in to the web server succeeds; and
receiving the menu map information corresponding to the input user information from the web server.

6. The method according to any one of claims 2 to 5, further comprising:
requesting for the menu map information to the web server, when the image forming apparatus is turned on, when the web server does not need a log in; and
receiving the menu map information from the web server.

7. The method according to any one of claims 2 to 6, further comprising:
loading the cached web page information on a hidden layer that cannot be seen on a screen displayed by the web browser, while waiting for the user control command in the web page; and
converting the loaded web page information into a format which can be displayed by the web browser, and
wherein the displaying a web page to be displayed after the web page displays the web page to be displayed after the web page based on the converted web page information when the user control command is input in the web page.

8. The method according to claim 7, wherein the loaded web page information is converted into a DOM (Document Object Model) tree format.

9. The method according to claim 7 or claim 8, further comprising storing the converted web page information in a storage unit of the image forming apparatus.

10. An image forming apparatus having a web browser comprising:
a user interface unit that displays a web page for receiving an input of a user control command; and
a control unit that caches web page information corresponding to a web page to be displayed after the web page, while waiting for the user control command in the web page,
wherein the control unit controls the user interface unit to display the web page to be displayed after the web page based on the cached web page information, when the user control command is input in the web page.

11. The apparatus according to claim 10, wherein the control unit caches the web page information corresponding to a web page to be displayed after the web page, while waiting for the user control command in the web page, and
the menu map information comprises user configuration information, list information of an executable application, menu configuration information of the executable application and operation information of the executable application.

12. The apparatus according to claim 11, wherein the menu map information is one that is received from a web server or stored in a storage unit of the image forming apparatus.

13. The apparatus according to claim 12, wherein the control unit controls to detect the menu configuration information of the executable application and the operation information of the executable application from the menu map information, request for the web page information corresponding to a web page to be displayed after the web page to the web server based on the detected menu configuration information of the executable application and the operation information of the executable application to the web server, and cache the requested web page information.

14. The apparatus according to any one of claims 11 to 13, wherein the user interface unit displays a web page for receiving an input of user information for performing a log in to a web server, and
the control unit controls a web browser to request for the menu map information to the web server, and to receive the menu map information corresponding to the user information input from the web server, when the log in to the web server succeeds.

15. The apparatus according to any one of claims 11 to 14, wherein the control unit controls the web browser to request for the menu map information to the web server when the image forming apparatus is turned on when the web server does not need a log in, and to receive the menu map information from the web server.
